Europäisches Patentamt

European Patent Office

Office européen des brevets

(19)

(11) **EP 1 075 122 A1**

(12) **DEMANDE DE BREVET EUROPEEN**

(43) Date de publication:
**07.02.2001 Bulletin 2001/06**

(51) Int Cl.[7]: **H04L 25/02**

(21) Numéro de dépôt: **00401831.3**

(22) Date de dépôt: **27.06.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **29.06.1999 FR 9908528**

(71) Demandeur: **Mitsubishi Electric Information Technology Centre Europe B.V.**
**1101 AG Amsterdam Zuidoost (NL)**

(72) Inventeurs:
• **GUILLOUARD Samuel, Lab. LCST, INSA de Rennes**
**35043 RENNES (FR)**
• **EL ZEIN, Ghais, Laboratoire LCST, INSA de Rennes**
**35043 RENNES (FR)**

(74) Mandataire: **Maillet, Alain**
**SCP Le Guen & Maillet,**
**5, Place Newquay,**
**B.P. 70250**
**35802 Dinard Cedex (FR)**

(54) **Mesure de la réponse impulsionnelle pour un code pseudo-aléatoire qui change en fonction du facteur de glissement**

(57) La présente invention concerne un procédé de mesure de la réponse impulsionnelle d'un canal entre un émetteur (10) et un récepteur (20), consistant à émettre au moyen d'un émetteur (10) sur ledit canal un code pseudo-aléatoire (PN) dit code d'émission, à démoduler le signal reçu par ledit récepteur (20), puis à corréler ledit signal démodulé avec un code pseudo-aléatoire (PN') dit code de réception, ledit code de réception étant identique au code d'émission mais de débit inférieur d'un facteur de glissement (1/k), et enfin à déduire du résultat de ladite corrélation la réponse impulsionnelle dudit canal.

Selon une caractéristique de la présente invention ledit code d'émission (PN) est tel que sa variation dans le temps ($c_1(t)$) est périodique d'une durée ($T_m$) inférieure à la durée totale ($L.T_c$) dudit code d'émission (PN) multipliée par ledit facteur de glissement (1/$k$) et ledit code de réception (PN') est tel que sa variation dans le temps ($c_2(t)$) est périodique d'une durée inférieure à la durée ($T_m$) dudit facteur de glissement (1/$k$).

La présente invention concerne également un système pour la mise en oeuvre dudit procédé.

Fig. 3

EP 1 075 122 A1

**Description**

La présente invention concerne un procédé de mesure de la réponse impulsionnelle d'un canal entre un émetteur et un récepteur.

L'évolution des télécommunications amène à considérer des réseaux locaux picocellulaires, c'est-à-dire des réseaux constitués de raccordements sans fil dont le rayon d'action est au maximum celui d'un bâtiment. Une bande de fréquences centrée sur la fréquence de 60 GHz est d'ors et déjà considérée. Cette bande autorise en effet des transmissions à des vitesses de l'ordre de 155 Mbits/s. Par ailleurs, les ondes dans cette bande subissent une relativement haute atténuation ce qui autorise l'utilisation d'un haut taux de réutilisation des fréquences.

Les ondes émises dans cette bande et dans ces conditions sont l'objet de nombreuses réflexions, diffractions et diffusion sur les obstacles rencontrés lors de leur transmission. Il s'ensuit que les récepteurs ne reçoivent pas une onde mais plusieurs qui ont toutes suivies un trajet différent. C'est le phénomène dit des trajets multiples (multipath en terminologie anglaise).

On doit noter que la présente invention n'est pas limitée à la bande de fréquences mentionnée ci-dessus.

La mise en oeuvre de ces réseaux picocellulaires nécessitent donc la connaissance des conditions de propagation rencontrées dans leur lieu d'installation. Pour ce faire, sont utilisés des systèmes de mesure de propagation essentiellement constitués d'un émetteur pour émettre une onde et un récepteur pour la recevoir et l'analyser. Pour effectuer des mesures précises à de telles très hautes fréquences, deux familles de techniques de mesure de propagation peuvent être considérées : la famille des techniques fréquentielles et celle des techniques temporelles.

Une technique fréquentielle consiste à mesurer la réponse du canal pour chaque fréquence constituant la bande à analyser. Elle implique une durée excessive de mesure qui la rend complètement inadaptée à la mesure de propagation de canaux non stationnaires tels que ceux qui sont concernés par la présente invention.

Une technique temporelle consiste à émettre un signal à large bande et à analyser la réponse de récepteur de manière à pouvoir retrouver la réponse impulsionnelle du canal ainsi que la fonction de transfert associée. Cette mesure étant effectuée rapidement, il est possible d'enchaîner rapidement les mesures et donc de caractériser pleinement les variations temporelles du canal. Le prix à payer pour cette rapidité est un niveau de bruit plus important (lié à la largeur de bande du signal) et une complexité du récepteur liée à la démodulation et à l'acquisition du signal large bande émis par l'émetteur.

On connaît également une technique, dite de corrélation glissante, qui permet de réduire la bande de bruit en réception et de conduire ainsi à une réalisation beaucoup plus simple du récepteur d'un système de mesure.

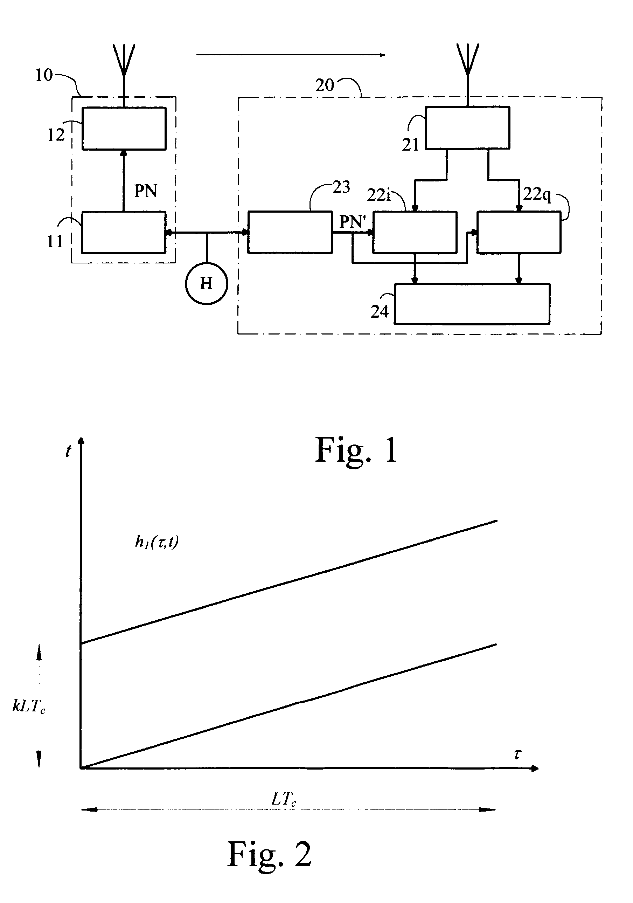

On a représenté à la Fig. 1 un tel système de mesure mettant en oeuvre cette technique de corrélation glissante et comportant pour ce faire un émetteur 10 et un récepteur de mesure 20. L'émetteur 10 est pourvu d'un générateur 11 prévu pour engendrer un code pseudo-aléatoire PN, dit code d'émission, de débit $D_e$ et de longueur L et d'une unité de transposition de fréquence 12 pour pouvoir émettre ledit code pseudo-aléatoire sur une porteuse de fréquence $f_{OL}$.

Quant au récepteur 20, il comporte une unité de démodulation cohérente 21 qui délivre des signaux démodulés en phase à une unité 22i et en quadrature à une unité 22q. Chaque unité 22i, 22q est prévue pour effectuer la corrélation du signal démodulé présent sur son entrée avec un code pseudo-aléatoire PN', dit code de réception, identique au code PN mais d'un débit $D_e$ légèrement inférieur d'un facteur de glissement $1/k$ ($D_e = (1 - D_e)$ Ce code PN' est engendré par un générateur 23 qui est par exemple synchronisé avec le générateur 11 au moyen d'une horloge H.

Les signaux délivrés par les unités 22i et 22q sont fournis à une unité d'acquisition des mesures 24 qui est prévue pour en déduire la réponse impulsionnelle du canal entre l'émetteur 10 et le récepteur 20.

D'un point de vue théorique, le signal émis par l'émetteur 10 est de la forme :

$$e(t) = c(t) \cos(2\pi f_{OL}\, t)$$

où $f_{OL}$ est la fréquence porteuse et $c(t)$ une fonction qui représente les variations dans le temps du code pseudo-aléatoire PN de débit $D_e$ et de longueur L. Le débit $D_e$ est donné par l'inverse de la durée $T_c$ d'un élément du code PN.

Si $h(\tau,t)$ représente la réponse impulsionnelle du canal de liaison entre l'émetteur 10 et le récepteur 20 qui dépend à la fois du temps t et du retard $\tau$ du signal entre l'émetteur 10 et le récepteur 20, le signal reçu par le récepteur 20, en l'absence de bruit, s'exprime par l'équation suivante :

$$r(t) = c(t)\cos(2\pi f_{OL} t) \otimes h(\tau,t) = \int_{-\infty}^{\infty} h(\xi,t) c(t-\xi)\cos(2\pi f_{OL}(t-\xi)) d\xi$$

Les signaux respectivement en sortie des unités 22i et 22q du récepteur 20 après corrélation avec le code pseudo-aléatoire PN' du signal qui a été démodulé par l'unité 21 s'expriment au moyen des équations suivantes :

$$m_I(t) = \int_{t-LT_c}^{t} \int_{-\infty}^{\infty} h_l(\xi,\tau) c(\tau-\xi) c\left(\left(1-\tfrac{1}{k}\right)\tau\right)\cos(2\pi f_{OL}\xi) d\xi d\tau$$

$$m_Q(t) = \int_{t-LT_c}^{t} \int_{-\infty}^{\infty} h_l(\xi,\tau) c(\tau-\xi) c\left(\left(1-\tfrac{1}{k}\right)\tau\right)\sin(2\pi f_{OL}\xi) d\xi d\tau$$

où $m_I(t)$ et $m_Q(t)$ représentent les enveloppes des signaux en phase et en quadrature respectivement délivrés par les unités 22i et 22q et où $h_l(\tau,t)$ désigne l'équivalent passe-bas de la réponse impultionnelle $h(\tau,t)$ du canal entre l'émetteur 10 et le récepteur 20. La durée du signal pour laquelle la mesure a été effectuée correspond à la durée totale d'émission du code PN, soit $LT_c$. Dans les expressions, cette durée est également celle d'intégration.

La corrélation est dite glissante car le débit du code pseudo-aléatoire PN' est légèrement inférieur à celui du code pseudo-aléatoire PN si bien qu'il glisse par rapport à ce dernier. L'amplitude de ce glissement est le décalage temporel entre le code PN' et le code PN.

On peut montrer que si ce glissement est faible au regard de la durée $LT_c$ totale d'émission du code PN, c'est à dire si $1/k \ll L$, l'enveloppe complexe du signal de mesure s'exprime par la relation suivante :

$$M(t) = \int_{-\infty}^{\infty} h_l(\xi,t) \phi\left(\tfrac{t}{k}-\xi\right) d\xi = h_l\left(\tfrac{t}{k},t\right) \otimes \phi\left(\tfrac{t}{k}\right)$$

où $\Phi(t)$ désigne la fonction d'autocorrélation du code pseudo-aléatoire PN et où $M(t) = m_I(t) + j.m_Q(t)$.

Si la réponse impulsionnelle $h_l(\tau,t)$ est nulle pour tout retard qui est supérieur à la durée totale du code ($\tau > LT_c$), cette enveloppe complexe s'exprime alors par la relation suivante :

$$M(t) = h_l\left(\tfrac{t}{k}-nLT_c,t\right) \otimes \phi_r\left(\tfrac{t}{k}-nLT_c\right) \text{pour } t \in \left[nkLT_c, (n+1)kLT_c\right[$$

où $\phi_r(\ )$ désigne la fonction d'autocorrélation du code pseudo-aléatoire PN qui est réduite à l'intervalle

$$\left[-\tfrac{LT_c}{2}, \tfrac{LT_c}{2}\right[.$$

L'équation ci-dessus montre que l'amplitude du signal de mesure présente une résolution qui dépend de la valeur prise par la fonction d'autocorrélation réduite $\Phi_r(\ )$.

On a représenté à la Fig. 2 un diagramme des points de la réponse impulsionnelle qui font l'objet d'une mesure au moyen du système jusqu'ici décrit. On constate que ces points (formant ce qui est nommé la fenêtre d'observation) correspondent à la durée totale du code. Ce diagramme montre également que le temps de la mesure de la réponse impulsionnelle du canal liant l'émetteur 10 au récepteur 20 est égal au produit de l'inverse du facteur de glissement 1/*k* et de la durée totale *LT*$_c$ du code d'émission PN et qui est donc dilaté d'un facteur égal à l'inverse du facteur de glissement 1/*k*.

Cette dilatation temporelle correspond à une compression fréquentielle dans les mêmes proportions : la largeur de bande du signal à traiter est réduite au débit du code pseudo-aléatoire multiplié par le facteur de glissement 1/*k* (soit à D$_e$/k) ce qui facilite l'acquisition et réduit la bande de bruit. Elle permet de s'affranchir des problèmes d'acquisition puisque le signal à mesurer devient à bande plus étroite.

Le temps de mesure d'une réponse impulsionnelle s'allonge par contre considérablement. Ainsi, les variations du canal ne sont effectivement mesurées que si elles restent suffisamment lentes.

Mais le temps de mesure peut s'avérer excessif, notamment dans le cas de canaux variant rapidement au cours du temps.

Le but de la présente invention est donc de proposer un procédé de mesure de la réponse impulsionnelle d'un canal qui permette de limiter la fenêtre d'observation à la partie intéressante de la réponse impulsionnelle et de limiter le temps de mesure en conséquence.

Pour ce faire, un procédé selon la présente invention est remarquable en ce que ledit code d'émission (PN) est tel que sa variation dans le temps (*c*$_1$(*t*)) est périodique d'une durée (*T*$_m$) inférieure à la durée totale (*L.T*$_c$) dudit code d'émission (PN) multipliée par ledit facteur de glissement (1/*k*) et ledit code de réception (PN') est tel que sa variation dans le temps (*c*$_2$(*t*)) est périodique d'une durée inférieure à la durée (*T*$_m$) dudit facteur de glissement (1/*k*), lesdites variations desdits codes d'émission et de réception (*c*$_1$(*t*)) et (*c*$_2$(*t*)) étant alors définies par les équations suivantes :

$$c_1(t) = c(t - nT_m) \text{ pour } t \in [nT_m, (n+1)T_m[ \quad \forall n$$

$$c_2(t) = c\left(\left(1 - \tfrac{1}{k}\right) \times (t - nT_m)\right) \text{ pour } t \in [nT_m, (n+1)T_m[ \quad \forall n$$

où *c(t)* est une variation de temps de référence d'un code pseudo-aléatoire.

Selon une autre caractéristique de l'invention, ledit code d'émission est tel que sa variation dans le temps est décalée, par rapport à la variation dudit code de réception, d'une durée inférieure à la durée totale dudit code d'émission, lesdites variations desdits codes d'émission et de réception étant alors définies par les équations suivantes :

$$c_1(t) = c(t + T_d - nT_m) \text{ pour } t \in [nT_m, (n+1)T_m[ \quad \forall n$$

$$c_2(t) = c\left(\left(1 - \tfrac{1}{k}\right) \times (t - nT_m)\right) \text{ pour } t \in [nT_m, (n+1)T_m[ \quad \forall n$$

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma synoptique d'un système de mesure mettant en oeuvre un procédé de mesure selon l'art antérieur,

La Fig. 2 est un diagramme des points de la réponse impulsionnelle qui font l'objet des mesures effectuées au moyen du système de mesure de la Fig. 1,

La Fig. 3 est un schéma synoptique d'un système de mesure mettant en oeuvre un procédé de mesure selon la présente invention,

La Fig. 4 est un diagramme des points de la réponse impulsionnelle qui font l'objet des mesures effectuées au moyen du système de mesure de la Fig. 3, et

La Fig. 5 est un schéma synoptique d'une variante de réalisation d'un système de mesure mettant en oeuvre un procédé de mesure selon la présente invention.

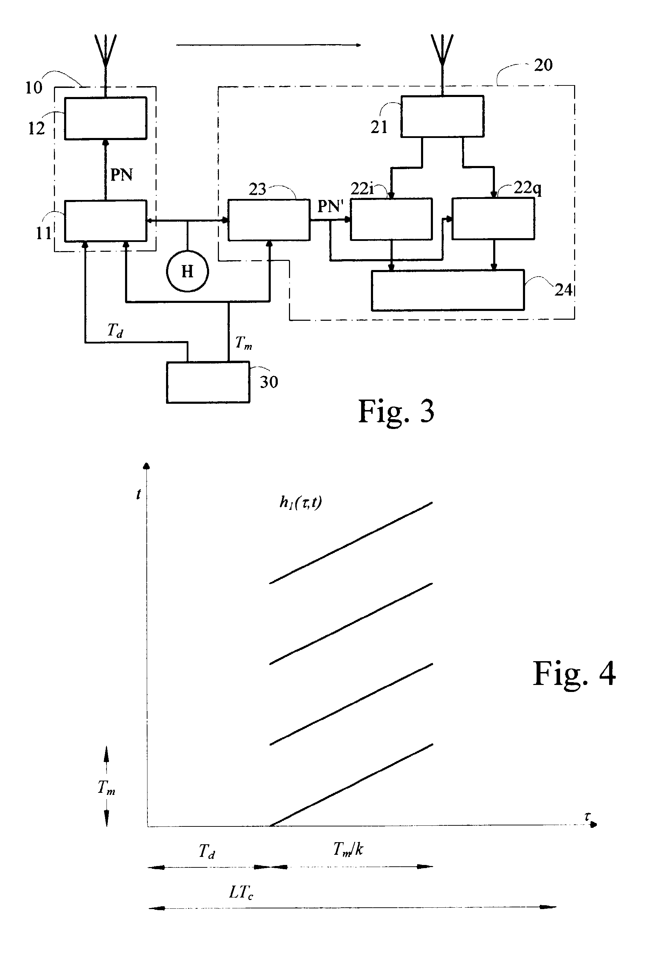

L'appareil de mesure représenté à la Fig. 3 diffère essentiellement de celui qui est représenté à la Fig. 1 par le fait qu'il comporte une unité de déclenchement 30 prévue pour piloter les générateurs 11 et 23 des codes pseudo-aléatoires d'émission et de réception PN et PN'. L'unité de déclenchement 30 délivre un signal de déclenchement périodique dont la périodicité correspond au temps de la mesure. Ce signal est par conséquent noté, sur la Fig. 3, $T_m$. Il est délivré à chacun des générateurs 11 et 23. L'unité 30 délivre aussi, au seul générateur 11, un signal de décalage qui est noté $T_d$.

Le générateur 11 engendre un code pseudo-aléatoire PN, dit code d'émission, dont la variation dans le temps est notée $c_1(t)$ et est, par rapport à une variation de référence notée $c(t)$, d'une part, périodique de durée $T_m$ et, d'autre part, décalée de la durée $T_d$ si bien que la variation $c_1(t)$ dudit code PN présente, au début de chaque cycle de durée $T_m$, un état qui correspond à celui de la variation de référence au temps T$d$.

La variation $c_1(t)$ dans le temps du code d'émission PN engendré par le générateur 11 s'exprime donc par la relation suivante :

$$c_1(t) = c\big(t + T_d - nT_m\big) \text{ pour } t \in \big[nT_m, (n+1)T_m\big[ \quad \forall n$$

Quant au générateur 23, il engendre un code pseudo-aléatoire PN' identique au code pseudo-aléatoire PN, dit code de réception, mais dont la variation dans le temps qui est notée $c_2(t)$ est, par rapport à la variation de référence $c(t)$, d'une part, cadencée plus lentement d'un facteur de glissement $1/k$ et, d'autre part, périodique de durée $T_m$.

La variation $c_2(t)$ dans le temps du code de réception PN' engendré par le générateur 23 s'exprime alors par la relation suivante :

$$c_2(t) = c\big(\big(1 - \tfrac{1}{k}\big) \times \big(t - nT_m\big)\big) \text{ pour } t \in \big[nT_m, (n+1)T_m\big[ \quad \forall n$$

Les codes d'émission et de réception PN et PN' respectivement engendrés par les générateurs 11 et 23 sont de longueur L. Ils sont par exemple des codes pseudo-aléatoires à longueur maximale. Leur longueur L est par exemple de 511 obtenue au moyen de 9 registres à décalage. Comme on le verra par la suite, les valeurs des durées $T_d$ et $T_m$ sont choisies en fonction du signal à mesurer. De manière générale, la valeur de la durée $Td$ est choisie bien inférieure à la durée totale $L.T_c$ du code d'émission PN et la valeur de la durée $T_m$ est choisie telle que $T_m < k. L. T_c$.

On notera que l'invention ne s'applique pas exclusivement à l'utilisation de codes pseudo-aléatoires à longueur maximale, mais également à tous types de codes dont la fonction d'autocorrélation présente des caractéristiques telles qu'elle est voisine de 1 lorsque les deux codes identiques corrélés sont en phase et telles qu'elle est voisine de zéro lorsque les deux codes identiques corrélés sont en opposition de phase.

On peut montrer que l'enveloppe complexe engendrée par l'unité de mesure 24 s'exprime alors au moyen de la relation suivante :

$$M(t) = h_l\left(\tfrac{t - nT_m}{k} + T_d, t\right) \otimes \phi_r\left(\tfrac{t - nT_m}{k}\right) \text{ pour } t \in \big[nT_m, (n+1)T_m\big[$$

On peut constater que seule la zone de la réponse impulsionnelle qui est comprise dans l'intervalle de temps

$$\big[T_d, T_d + \tfrac{T_m}{k}\big[$$

est alors observée et que le temps de mesure est alors égal à la valeur de la périodicité $T_m$ qui peut être choisie au moyen de l'unité de déclenchement 30.

Ainsi, l'utilisation des codes d'émission et de réception PN et PN' ci-dessus permet de focaliser la mesure sur une partie quelconque de la réponse impulsionnelle. La durée de la mesure peut être raccourcie et la longueur de la réponse impulsionnelle mesurée peut être limitée.

Par exemple, si la durée effective de la réponse impulsionnelle est a priori inférieure à une durée $\Delta T_m$ on pourra choisir comme valeur de périodicité une valeur de $T_m$ au plus égale à k.$\Delta T_m$.

D'après les équations ci-dessus, on peut constater que les codes d'émission et der réception PN et PN' ne sont pas dans le même état au début de chaque cycle. Le code d'émission PN est dans l'état $c(T_d)$ alors que le code de réception PN' est dans l'état $c(0)$. Cette différence d'état permet de supprimer le début de la mesure de la réponse impulsionnelle.

On a représenté à la Fig. 4, les points de la réponse impulsionnelle qui font l'objet d'une mesure au moyen du système de la présente invention. On constate que le temps de mesure $T_m$ est diminué par rapport à l'état de la technique ($T_m < kLT_c$) et que, par l'ajustement des 3 paramètres $T_d$, $T_m$ et $k$, il est possible d'effectuer la mesure sur une partie choisie de cette réponse impulsionnelle.

On remarquera que la fenêtre d'ambiguïté reste égale à la valeur constante $LT_c$, bien que l'analyse ne soit effectuée que sur l'intervalle

$$\left[ T_d, T_d + \tfrac{T_m}{k} \right[.$$

Ainsi, seules les parties de la réponse impulsionnelle situées dans les intervalles

$$\left[ T_d + nLT_c, T_d + \tfrac{T_m}{k} + nLT_c \right[$$

(avec $n$ entier non nul) viennent se confondre avec celle située dans l'intervalle d'étude.

Selon une première variante de réalisation de la présente invention, les codes d'émission et de réception PN et PN' respectivement engendrés par les générateurs 11 et 23 ont leurs variations $c_1(t)$ et $c_2(t)$ qui s'expriment, de manière plus générale, par les relations suivantes :

$$c_1(t) = c\big(t + T_d - nT_m + f(n)\big) \text{ pour } t \in \left[ nT_m, (n+1)T_m \right[$$

$$c_2(t) = c\big((1 - \tfrac{1}{k}) \times (t - nT_m) + f(n)\big) \text{ pour } t \in \left[ nT_m, (n+1)T_m \right[$$

où $f(n)$ est une suite quelconque qui varie seulement avec le quantième $n$ des mesures effectuées. Cela signifie que les décalages des deux codes d'émission et de réception PN et PN' sont identiques et peuvent être modifiés de mesure en mesure.

Selon une autre variante de réalisation de la présente invention qui constitue une généralisation de la première variante ci-dessus, les codes d'émission et de réception PN et PN' respectivement engendrés par les générateurs 11 et 23 ont leurs variations $c_1(t)$ et $c_2(t)$ qui s'expriment par les relations suivantes :

$$c_1(t) = c\big(t + T_d - nT_m + f(n)\big) \text{ pour } t \in \left[ nT_m + \Delta_{11}, (n+1)T_m - \Delta_{12} \right[$$

$$c_2(t) = c\big((1 - \tfrac{1}{k}) \times (t - nT_m) + f(n)\big) \text{ pour } t \in \left[ nT_m + \Delta_{21}, (n+1)T_m - \Delta_{22} \right[$$

où les termes $\Delta_{mn}$ désignent des temps de restriction des intervalles de temps de définition des fonctions $c_1(t)$ et $c_2(t)$.

En dehors de ces intervalles de temps, les fonctions $c_1(t)$ et $c2(t)$ peuvent prendre des valeurs quelconques.

Par exemple, ces temps de restriction peuvent définir des intervalles de garde nécessaires entre deux mesures pour permettre la réinitialisation des codes à engendrer. Dans ce cas, pour un temps de mesure toujours égal à la valeur $T_m$, la zone effective de mesure est réduite à la valeur suivante :

$$\frac{T_m - \max\big(\Delta_{12}, \Delta_{11}\big) - \max\big(\Delta_{22}, \Delta_{21}\big)}{k}$$

Selon un mode de réalisation particulier de la première variante de la présente invention, la fonction *f(n)* est définie comme étant égale à :

$$f(n) = n.T_m + T_d$$

si bien que le code PN engendré par le générateur 11 a pour expression, quel que soit le temps *t* :

$$c_1(t) = c(t)$$

Le code PN' engendré par le générateur 23 a quant à lui l'expression suivante :

$$c_2(t) = c\left(\left(1 - \tfrac{1}{k}\right) \times \left(t - nT_m\right) + nT_m - T_d\right) \text{ pour } t \in \left[nT_m, (n+1)T_m\right[$$

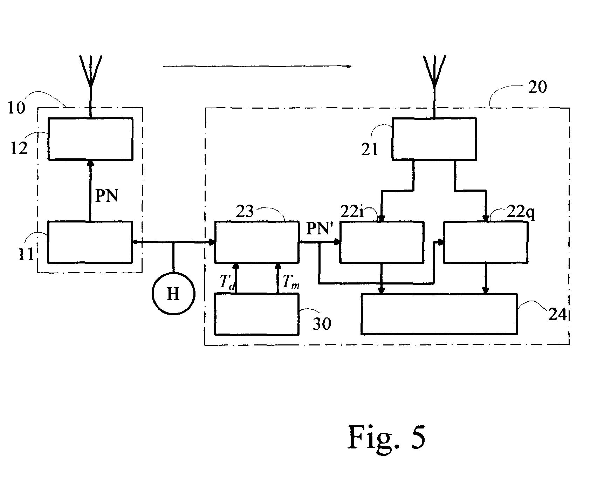

On peut constater que le code d'émission PN n'est alors plus émis de manière contrôlée, seule une mise en phase avec le code de réception PN' au moment initial est nécessaire. On a représenté à la Fig. 5, ce mode de réalisation particulier qui diffère du précédent qui était représenté à la Fig. 3 par le fait que l'unité de déclenchement 30 ne pilote plus que le générateur 23 auquel elle fournit maintenant le signal de décalage $T_d$ et le signal de périodicité $T_m$.

On constate que ce mode de réalisation présente l'avantage d'une structure simplifiée de l'émetteur 10, dont le code d'émission PN évolue sans contrôle extérieur. Ainsi, toute l'intelligence est déportée au niveau du récepteur 20, où il est possible d'ajuster, de la même manière que précédemment, les paramètres du système. Dans ce mode de réalisation, l'unité 30 peut, à l'instar de ce qui est représenté à la Fig. 5, faire partie à part entière du récepteur 20.

On peut avantageusement choisir le facteur de glissement 1/*k* de manière que son inverse soit un multiple entier de la longueur du code d'émission PN (*k* = *p.L, p* étant un entier). En effet, dans ce cas, la réalisation du générateur 23 est simplifiée puisqu'à chaque cycle du code de réception PN' (à chaque nouvelle mesure), le code de réception PN' est initialisé à partir du même état.

On appelle *Tons* la durée de la zone de la réponse impulsionnelle qui est effectivement observée. Le temps de mesure $T_m$ est alors choisi de manière à prendre la valeur suivante :

$$T_m = k\, T_{obs}$$

En réduisant la durée $T_{obs}$ de la zone observée à un multiple de la durée $T_c$ d'un élément du code PN, on peut écrire :

$$T_{obs} = m\, T_c$$

Il s'ensuit que le temps de mesure $T_m$ est égal à :

$$T_m = k\, m\, T_c$$

Or, par hypothèse en l'occurrence, l'inverse du facteur de glissement 1/*k* est un multiple entier de la longueur *L* du code PN. Le temps de mesure $T_m$ peut s'écrire :

$$T_m = p\, m\, L\, T_c$$

Finalement, la valeur prise par le code PN' au début d'un cycle de mesure est la suivante :

$$c_2\,(nT_m) = c(nmpLT_c - T_d) = c\,(-T_d)$$

du fait que $c(t)$ est périodique de période $LT_c$ (durée du code).

On décrit ci-après un mode de réalisation qui peut s'appliquer au cas de codes pseudo-aléatoires très rapides, c'est-à-dire lorsque la mesure demande une très bonne résolution. Selon ce mode de réalisation, l'expression du premier code s'écrit :

$$c_1(t) = c\big(t + T_d - nT_m + x\big) \text{ pour } t \in \big[nT_m - T_d, (n+1)T_m - T_d\big[$$

alors que l'expression du second code est :

$$c_2(t) = c\big((1 - \tfrac{1}{k}) \times (t - nT_m) + x\big) \text{ pour } t \in \big[nT_m, (n+1)T_m\big[$$

où x est une constante réelle, qui peut éventuellement être nulle ($x = 0$).

On notera alors que, dans ce cas, les deux codes $c_1(t)$ et $c_2(t)$ sont relancés à partir d'un même état qui est $c(x)$.

On notera encore que ce mode de réalisation correspond au cas général ci-dessus *où f(n)* est une fonction constante égale à $x$ et où les temps de restriction $\Delta_{11}$ et $\Delta_{12}$ sont égaux à l'inverse du temps de décalage $-T_d$, alors que les temps de restriction $\Delta_{21}$ et $\Delta_{22}$ sont nuls.

Pour la mise en oeuvre de tels codes PN et PN', une unité de retard peut être prévue pour affecter un retard de $T_d$ au signal de déclenchement du code PN' par rapport à celui du code PN.

On notera que les opérations de corrélation effectuées au moyen de ce mode de réalisation ont pour résultat une mesure faussée dans une période initiale de transition. Cependant, cette période de transition qui est de l'ordre du temps de décalage $T_d$ est généralement très courte au regard du temps d'intégration $LT_c$ des opérations de corrélation si bien que son effet peut être négligé sans mettre en cause l'exactitude du résultat final.

On notera que ce mode de réalisation peut également être mis en oeuvre en combinaison avec le précédent.

## Revendications

**1.** Procédé de mesure de la réponse impulsionnelle d'un canal entre un émetteur (10) et un récepteur (20), consistant à émettre au moyen d'un émetteur (10) sur ledit canal un code pseudo-aléatoire (PN) dit code d'émission, à démoduler le signal reçu par ledit récepteur (20), puis à corréler ledit signal démodulé avec un code pseudo-aléatoire (PN') dit code de réception, ledit code de réception étant identique au code d'émission mais de débit inférieur d'un facteur de glissement (1/$k$), et enfin à déduire du résultat de ladite corrélation la réponse impulsionnelle dudit canal, caractérisé en ce que ledit code d'émission (PN) est tel que sa variation dans le temps ($c_1(t)$) est périodique d'une durée ($T_m$) inférieure à la durée totale ($L.T_c$) dudit code d'émission (PN) multipliée par ledit facteur de glissement (1/$k$) et ledit code de réception (PN') est tel que sa variation dans le temps ($c_2(t)$) est périodique d'une durée inférieure à la durée ($T_m$) dudit facteur de glissement (1/$k$), lesdites variations desdits codes d'émission et de réception ($c_1(t)$) et ($c_2(t)$) étant alors définies par les équations suivantes :

$$c_1(t) = c\big(t - nT_m\big) \text{ pour } t \in \big[nT_m, (n+1)T_m\big[ \quad \forall n$$

$$c_2(t) = c\big((1 - \tfrac{1}{k}) \times (t - nT_m)\big) \text{ pour } t \in \big[nT_m, (n+1)T_m\big[ \quad \forall n$$

où $c(t)$ est une variation de temps de référence d'un code pseudo-aléatoire.

**2.** Procédé de mesure selon la revendication 1, caractérisé en ce que ledit code d'émission est tel que sa variation dans le temps est décalée, par rapport à la variation dudit code de réception, d'une durée inférieure à la durée totale dudit code d'émission, lesdites variations desdits codes d'émission et de réception étant alors définies par les équations suivantes :

$$c_1(t) = c(t + T_d - nT_m) \text{ pour } t \in [nT_m, (n+1)T_m[ \quad \forall n$$

$$c_2(t) = c\left(\left(1 - \tfrac{1}{k}\right) \times (t - nT_m)\right) \text{ pour } t \in [nT_m, (n+1)T_m[ \quad \forall n$$

**3.** Procédé de mesure selon la revendication 1 ou 2, caractérisé en ce que lesdites variations desdits codes d'émission et de réception sont décalées d'une même durée ($\Delta t$), lesdites variations desdits codes d'émission et de réception étant alors définies par les équations suivantes :

$$c_1(t) = c(t + T_d - nT_m + \Delta t) \text{ pour } t \in [nT_m, (n+1)T_m[$$

$$c_2(t) = c\left(\left(1 - \tfrac{1}{k}\right) \times (t - nT_m) + \Delta t\right) \text{ pour } t \in [nT_m, (n+1)T_m[$$

**4.** Procédé de mesure selon la revendication 1 ou 2, caractérisé en ce que lesdites variations desdits codes d'émission et de réception sont décalées d'une même durée ($\Delta t = f(n)$) qui varie de mesure en mesure, lesdites variations desdits codes d'émission et de réception étant alors définies par les équations suivantes :

$$c_1(t) = c(t + T_d - nT_m + f(n)) \text{ pour } t \in [nT_m, (n+1)T_m[$$

$$c_2(t) = c\left(\left(1 - \tfrac{1}{k}\right) \times (t - nT_m) + f(n)\right) \text{ pour } t \in [nT_m, (n+1)T_m[$$

où $f(n)$ est une suite quelconque qui varie seulement avec le quantième $n$ des mesures effectuées.

**5.** Procédé de mesure selon une des revendications précédentes, caractérisé en ce que lesdites variations desdits codes d'émission et de réception sont définies sur des intervalles de temps restreints, si bien que lesdites variations desdits codes d'émission et de réception étant alors définies par les équations suivantes :

$$c_1(t) = c(t + T_d - nT_m + \Delta t) \text{ pour } t \in [nT_m + \Delta_{11}, (n+1)T_m - \Delta_{12}[$$

$$c_2(t) = c\left(\left(1 - \tfrac{1}{k}\right) \times (t - nT_m) + \Delta t\right) \text{ pour } t \in [nT_m + \Delta_{21}, (n+1)T_m - \Delta_{22}[$$

où les termes $\Delta_{mn}$ désignent des temps de restriction des intervalles de temps de définition des fonctions $c_1(t)$ et $c_2(t)$, les fonctions $c_1(t)$ et $c_2(t)$ pouvant prendre des valeurs quelconques en dehors des intervalles de temps ainsi définis.

**6.** Procédé de mesure selon la revendication 4 ou 5, caractérisé en ce que lesdites variations desdits codes d'émission et de réception sont décalées d'une même durée ($\Delta t = f(n)$) qui varie de mesure en mesure selon la fonction suivante :

$$f(n) = n.T_m + T_d$$

si bien que la variation du code d'émission (PN) a pour expression, quel soit le temps $t$:

$$c_1(t) = c(t)$$

**7.** Procédé de mesure selon une des revendications précédentes, caractérisé en ce que le facteur de glissement a son inverse qui est un multiple entier de la longueur du code d'émission.

**8.** Procédé de mesure selon la revendication 5, caractérisé en ce que lesdites variations desdits codes d'émission et de réception sont décalées d'une même durée constante et en ce que où les temps de restriction $\Delta_{11}$ et $\Delta_{12}$ sont égaux à l'opposé du temps de décalage $-T_d$, alors que les temps de restriction $\Delta_{21}$ et $\Delta_{22}$ sont nuls, si bien que lesdites variations desdits codes d'émission et de réception étant alors définies par les équations suivantes :

$$c_1(t) = c\left(t + T_d - nT_m + x\right) \text{ pour } t \in \left[nT_m - T_d, (n+1)T_m - T_d\right[$$

alors que l'expression du second code est :

$$c_2(t) = c\left(\left(1 - \tfrac{1}{k}\right) \times \left(t - nT_m\right) + x\right) \text{ pour } t \in \left[nT_m, (n+1)T_m\right[$$

où $x$ est une constante réelle, qui peut éventuellement être nulle ($x = 0$).

**9.** Système pour la mesure de la réponse impulsionnelle d'un canal, ledit système comprenant un émetteur (10) pour émettre sur ledit canal un code pseudo-aléatoire (PN) dit code d'émission engendré par un générateur (11) et un récepteur (20) pourvu d'une unité de démodulation (21) pour démoduler le signal reçu par dudit émetteur (10), au moins une unité de corrélation (22i, 22q) prévue pour corréler ledit signal démodulé avec un code pseudo-aléatoire (PN') dit code de réception engendré par un générateur (23) de manière que ledit code de réception soit identique au code d'émission mais de débit inférieur d'un facteur de glissement ($k$), et une unité de mesure (24) prévue pour déduire du résultat de ladite corrélation la réponse impulsionnelle dudit canal, caractérisé en ce que les générateurs (11) et (23) sont prévus pour engendrer des codes pseudo-aléatoires (PN et PN') afin de mettre en oeuvre d'un procédé de mesure selon une des revendications 1 à 8.

Fig. 1

Fig. 2

Fig. 3

Fig. 4

Fig. 5

**Office européen des brevets**

## RAPPORT DE RECHERCHE EUROPEENNE

Numéro de la demande

EP 00 40 1831

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GUILLOUARD S ET AL: "Wideband propagation measurements and Doppler analysis for the 60 GHz indoor channel" IEEE, pages 1751-1754 vol.4, XP002132129 1999, Piscataway, NJ, USA, IEEE, USA ISBN: 0-7803-5135-5 | 9 | H04L25/02 |
| Y | * abrégé; figure 2 * * page 1751, colonne 2, ligne 9 – page 1752, colonne 2, ligne 37 * | 1-8 | |
| Y | DE JONG Y L C ET AL: "Accurate identification of scatterers for improved microcell propagation modelling" IEEE, pages 645-649 vol.2, XP002132130 1997, New York, NY, USA, IEEE, USA ISBN: 0-7803-3871-5 * page 646, colonne 1, ligne 11 – ligne 28 * * page 646, colonne 2, ligne 59 – ligne 61 * | 1-8 | |
| | | | **DOMAINES TECHNIQUES RECHERCHES (Int.Cl.7)** |
| Y | US 5 164 959 A (DELL-IMAGINE ROBERT A ET AL) 17 novembre 1992 (1992-11-17) * abrégé; figure 3 * | 2-6,8 | H04L H04B |

Le présent rapport a été établi pour toutes les revendications

| Lieu de la recherche | Date d'achèvement de la recherche | Examinateur |
|---|---|---|
| BERLIN | 14 septembre 2000 | Binger, B |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 00 40 1831

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

14-09-2000

| Document brevet cité au rapport de recherche | Date de publication | Membre(s) de la famille de brevet(s) | Date de publication |
|---|---|---|---|
| US 5164959 A | 17-11-1992 | AUCUN | |

EPO FORM P0460

Pour tout renseignement concernant cette annexe : voir Journal Officiel de l'Office européen des brevets, No.12/82